# EUROPEAN PATENT SPECIFICATION

(11) **EP 2 122 269 B1**
(45) Date of publication and mention of the grant of the patent: **21.04.2010**
(21) Application number: 07856904.3
(22) Date of filing: 19.12.2007
(51) Int. Cl.: F24J 2/12, G02B 5/10

(54) **METHOD AND EQUIPMENT FOR PRODUCING A SOLAR CONCENTRATOR**
VERFAHREN UND VORRICHTUNG ZUR HERSTELLUNG EINES SOLARKONZENTRATORS
PROCÉDÉ ET ÉQUIPEMENT POUR LA CONSTRUCTION D'UN CONCENTRATEUR D'ÉNERGIE SOLAIRE

(30) Priority: 21.12.2006 IT MI20062472
(43) Date of publication of application: 25.11.2009
(73) Proprietor: Bettonte, Marco, 38070 Terlago-Fraz.Monteterlago (TN) (IT); Brusa, Roberto Sennen, 38057 Pergine Valsugana (TN) (IT); Miotello, Antonio, Canale 38057 Frazione di Pergine Valsugana (TN) (IT)
(72) Inventor: Bettonte, Marco, 38070 Terlago-Fraz.Monteterlago (TN) (IT); Brusa, Roberto Sennen, 38057 Pergine Valsugana (TN) (IT); Miotello, Antonio, Canale 38057 Frazione di Pergine Valsugana (TN) (IT)
(74) Representative: Paglia, Pietro
(86) International application number: PCT/EP2007/011181
(87) International publication number: WO 2008/074485

(56) References cited:
- FR-A- 2 391 420
- GB-A- 2 060 926
- JP-A- 58 169 102
- US-A- 3 541 825
- US-A- 4 035 065
- US-A- 4 124 277
- US-A1- 2007 223 121
- US-B1- 6 664 939

## Description

### Field of Application

The present invention generally refers to the sector pertaining to the use of solar rays, or solar radiations, for the production of energy, and in particular to a use by means of a system of concentration or focusing of the solar rays.

Still more in particular, the present invention refers to a method for obtaining a solar concentrator and equipment for its achievement.

### Prior art

As is known, the principle underlying a concentration or focusing system of solar rays is that of using a solar concentrator, i.e. a mirror with wide reflective surfaces, and capable of concentrating the reflected solar rays over reduced surfaces composing a so-called receiver, where the solar rays are absorbed and converted into another form of useful energy.

For example, a receiver is formed of high performance photovoltaic cells, or a heat exchanger, or a thermodynamic motor.

In substance, in a system for the concentration of solar rays, the solar concentrator constitutes the optical component, i.e. the part of the system which reflects, and directs, the solar rays towards the receiver.

In order to ensure a satisfying concentration of the solar rays on the receiver, a known solar receiver comprises a wide parabolic reflective surface, which is capable of concentrating the light coming from the sun in the focus, where the receiver is situated.

In order to obtain one such wide parabolic reflective surface, the solar concentrator comprises a plurality of flat mirrors fit side-by-side each other, substantially they are polygonal mirror tesserae fit together to form a mosaic structure, and arranged on a concave wall of a suitable support with parabolic form.

The known solar concentrators, while advantageous in many respects, nevertheless present several drawbacks, which have yet to be remedied.

For example, one drawback of the known solar concentrators lies in the fact that the plurality of mirrors, which form the wide parabolic reflective surface, cause an aberration of the reflected rays. Such aberration is ascribable to the presence of surface discontinuities between one flat mirror and the adjacent flat mirror.

In addition, the use of multiple mirrors makes it very difficult both to concentrate the solar rays over a small area and to obtain a uniform distribution of energy concentrated over a specific area. A non-uniform distribution of energy over the surface of a solar cell induces short-circuit currents which can lead to the destruction of the cell itself.

The aberration is also increased by the presence of possible local undulations of single mirror surfaces that can be generated, for example, from inadequate preparation methods of the mirrors.

These disadvantages are more evident and significant when the concentrators are used with concentration photovoltaic cells, which have high costs per unit of sensitive surface. These concentration photovoltaic cells are in fact more efficient the greater the solar energy is concentrated thereon.

Moreover, in the case of receivers formed by several concentration photovoltaic cells, their functioning requires high irradiation uniformity.

For the abovementioned reasons, in order to ensure all of these conditions (high concentration and irradiation uniformity) with concentrators formed by a plurality of mirrors, it is necessary to provide specific adaptations for each mirror, which penalises mass production.

In order to overcome these drawbacks, one could couple an optical lens to a single solar cell, which concentrates the solar rays on the cell itself. This system, however, is capable of producing only low power. In order to obtain high powers, one would have to integrate multiple cell-lens systems with considerable increase in costs.

Document FR-A-2391420 discloses a method for manufacturing a parabolic solar reflector comprising the steps of: applying a reflective sheet on a shaped mold; gluing a honeycomb shaped stiffening layer to said reflective sheet; gluing a second sheet on top of said stiffening layer.

Document US-A-3541825 discloses an apparatus for making curved reflectors starting from a flat mirror section, wherein the apparatus comprises a paraboloidal mold. A vacuum is established in the space between the surface of the mirror section and the forming surface of the mold to bring these surfaces into intimate contact. The mold is heated to about 400° F and proper clamps to tighten the mirror section against the mould are provided.

Document US-A-4035065 discloses a method of fabricating a parabolic solar mirror arranging a flat glass lamina on a pre-shaped support surrounded with a flexible bag. The bag is then evacuated by a vacuum source to apply a uniform pressure across the surface of the lamina. The flat glass lamina is previously coated with epoxy resin which is cured under vacuum until it is bonded to the pre-shaped support made of lapped cellular glass substrate.

### Summary of the invention

The method, according to the present invention, permits obtaining a solar concentrator formed by a single mirror having a continuous reflective surface with round paraboloid form, which ensures high concentration properties.

The method according to the invention also permits making a solar concentrator having any one size, by using a mould having the form of a round paraboloid, or even a portion thereof, and a flat starting mirror having size corresponding to that of the solar concentrator to be obtained.

In addition, according to the plasticity of the material composing the mirror, for example glass or plastic material, the pressure on the mirror can be carried out within a specific range of values, and preferably for pressure values equal to or greater than one atmosphere, at ambient temperature, or at a greater temperature by means of heating of the mirror, substantially carrying out a thermoforming.

In particular, the shaping step is carried out by positioning, in a mutual predetermined operating relation, the mould and the flat starting mirror inside a soft, i.e. pliable or non-rigid, vacuum container and by gradually achieving a vacuum inside said non-rigid container, so that the non-rigid container is gradually pressed on said mirror against the round paraboloid-shaped wall of said mould.

In substance, the flat starting mirror is placed atop the mould inside a non-rigid vacuum container, and the pressure exerted on the flat starting mirror against the mould is obtained by creating a reduced pressure or vacuum condition inside a non-rigid vacuum container with respect to the external pressure, i.e. the pressure which externally acts over the non-rigid container and the mirror.

The external pressure thus uniformly compresses the non-rigid container and thus also the starting mirror on the mould for its shaping. In other words, in reduced pressure conditions, the mirror is thrust against the mould by the atmospheric pressure overlying the non-rigid container, and takes on its form. The reduced pressure created inside the non-rigid container has the advantage of ensuring a gradual and uniformly distributed shaping of the mirror.

Using a flat starting -mirror of 0.8 mm, it is possible to carry out the shaping for example by fixing a pressure difference between non-rigid container exterior and interior of about 1 atmosphere, and maintaining the non-rigid container at ambient temperature.

Preferably, the round paraboloid-shaped wall is a convex wall of said mould and the flat mirror is substantially positioned in abutment thereon, i.e. it is put on the mould, with the reflective surface turned towards said convex wall.

Subsequently, once shaping has been completed, a substantially shell-shaped stiff covering is associated to said concave mirror, above the mirror and thus on the side thereof opposite the respective reflective surface.

The stiff covering is preferably obtained in the same non-rigid container destined for shaping the mirror.

In particular, a layer of porous inert material is arranged on the side of the mirror opposite the respective reflective surface. Subsequently, the non-rigid container is filled with fluid glue, preferably thermosetting, which penetrates into the inert material in order to stiffen the inert material and fix it to the mirror.

The hardening causes a stiffening of the inert material layer, which thus forms a stiff covering integral with the shaped mirror.

For the insertion of the glue inside the non-rigid container, an insertion is carried out by infusion under vacuum; in substance, one takes advantage of the reduced pressure or vacuum existing inside the non-rigid vacuum container in order to suck the fluid glue therein. For such purpose, the non-rigid container is placed in communication, through an inflow line, with a glue reserve.

The reduced pressure inside the non-rigid container thus has the double function for shaping the flat starting mirror and obtaining a concave mirror, and for drawing glue inside the non-rigid container for the formation of the stiff covering.

In an alternative embodiment, the round paraboloid-shaped wall of the mould, on which the mirror is shaped, is a concave wall of the mould, and still more in particular the mould comprises a concave shell, for example a metal or plastic material shell.

The flat mirror, in particular the surface thereof opposite the respective reflective surface, is initially positioned in substantial abutment on the mould, i.e. it is put on the mould, such that the surface of the flat starting mirror, which is opposite the reflective surface is turned towards, i.e. it faces, the concave wall of the mould.

Subsequently, a uniform and gradually increasing pressure is exerted on the mirror in order to obtain the shaping of the mirror on the concave wall of the mould. The pressure can be exerted in any one known mode, such as for example a vacuum by means of non-rigid container.

In such a manner, a mirror is obtained with reflective surface shaped as a round paraboloid.

In accordance with this embodiment, the mould, which as mentioned has the form of a shell, also constitutes a stiff covering for the mirror. In particular, upon completed shaping, the non-reflective surface of the mirror is fixed to the concave wall of the mould by means of, for example, a glue film, which had been previously interposed, before shaping, between the non-refleetiwe surface and the mould.

This has the advantage of making the stiff covering of the mirror by means of the same mould for the shaping, and substantially during the same shaping step.

Further characteristics and advantages of the method for obtaining a solar concentrator according to the invention will be clearer from the following description of an embodiment thereof, given as indicative and non-limiting with reference to the enclosed drawings.

### Brief description of the drawings

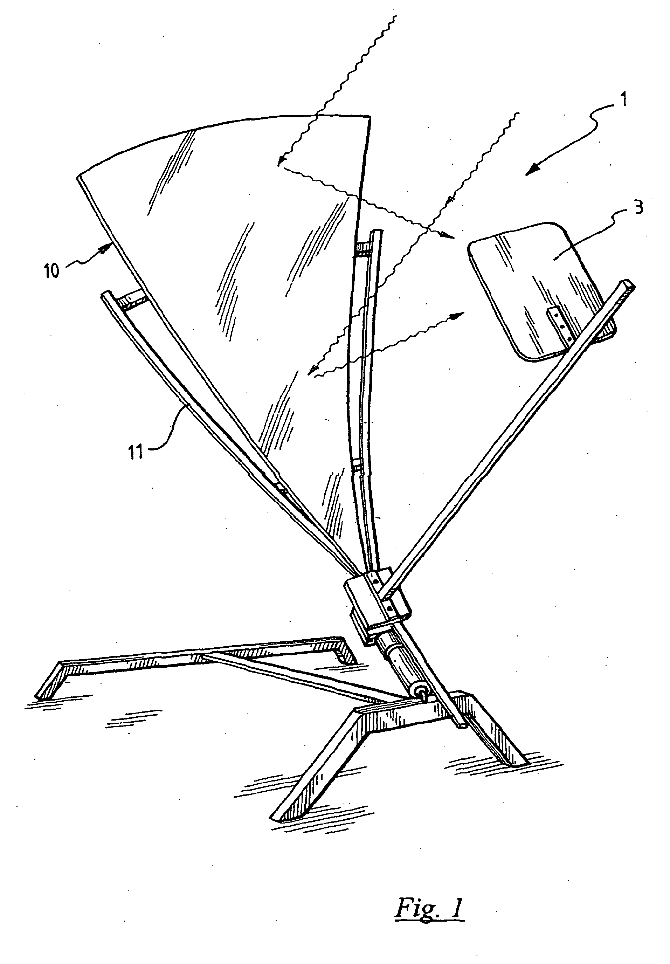

Figure 1 illustrates a system for the concentration of solar rays comprising a solar concentrator according to the invention.

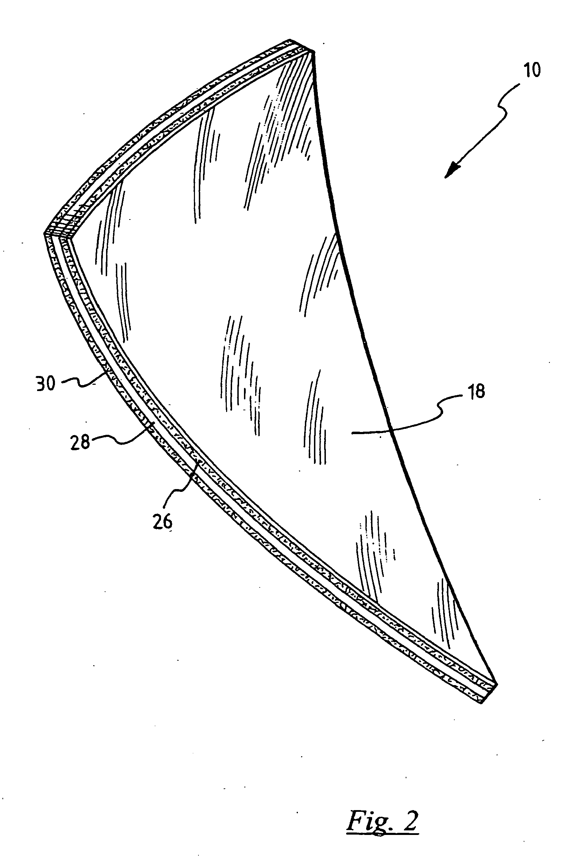

Figure 2 illustrates the solar concentrator of figure 1 in enlarged scale.
Figure 3 illustrates the solar concentrator of figure 2 during a first step of the method according to the invention;
Figure 4 illustrates the solar concentration of figure 2 during a second step of the method according to the invention;

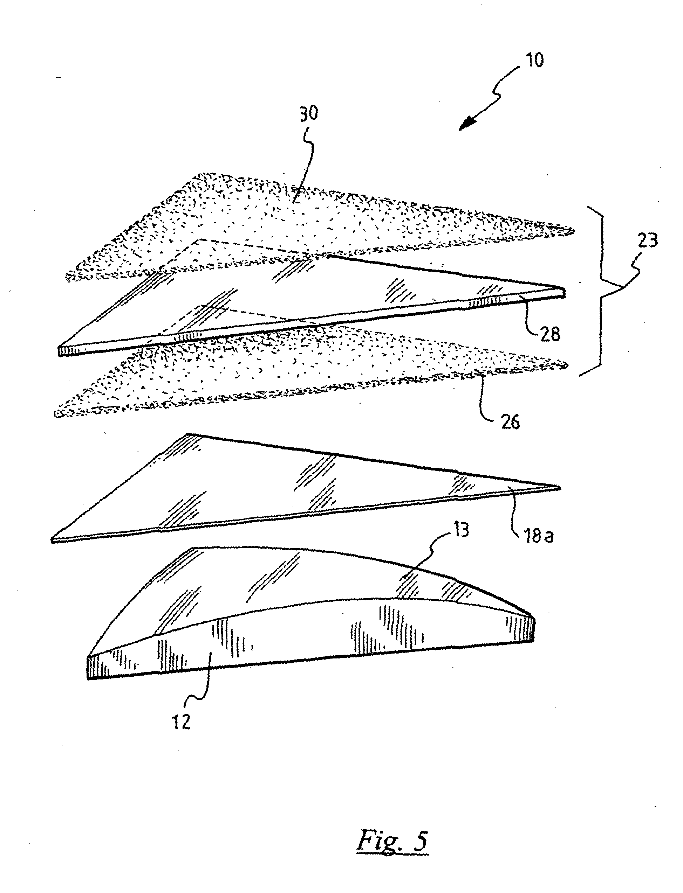

Figure 5 illustrates the solar concentrator of figure 3 with separated parts,
Figure 6 illustrates the solar concentrator of figure 2 during a third step of the method according to the invention;
Figure 7 illustrates a solar concentrator of figure 2 during a fourth step of the method according to the invention;
Figure 8 illustrates a detail in enlarged scale of figure 7.

### Detailed description

With reference to the enclosed figures, reference number 10 generally indicates a solar concentrator according to the invention, comprising a concave mirror 18 having continuous reflective surface shaped as a round paraboloid.

The solar concentrator 10 is mounted on a support frame 11 of a system for the concentration of solar rays, indicated overall with the number 1 and comprising a receiver 3, in the example composed of a panel supporting photovoltaic cells, which are not visible in the drawings.

The method according to the invention provides prearranging a mould 12 having a round paraboloid-shaped wall 13. In the example, the mould 12 is convex and consists of a slice portion with upward-directed convexity,

Still more in particular, the mould 12 has round paraboloid sector form, substantially a round paraboloid section.

In the embodiment, the mould is made of resin, and has 3 m×0.70 m×0.5 m dimensions.

The mould 12 is inserted inside a soft, i.e, non-rigid, container 14, in the example a vacuum bag made of plastic material of the type commonly found on the market, at whose interior a shaping chamber is defined.

The non-rigid container 14 is connected by means of a suction duct 15 to a suction pump 16, suitably equipped with regulating valves and a manometer, not shown in the drawings.

On the mould 12, a flat starting mirror 18a is arranged, of the type commonly found on the market and having predetermined thickness, in the example 0.8 mm, i.e. a glass sheet provided with a silver-plated reflective layer. In particular, the flat mirror 18a is arranged such that its reflective surface is turned towards the convex wall 13 of the mould 12.

In the example, the flat mirror 18a has triangular form, or triangular outline.

On the flat mirror 18a surface opposite the reflective surface, a layer of inert material is arranged, generally indicated with the reference number 23. Such layer constitutes a covering for the mirror 18, as will be explained below.

In particular, in the example, the inert material layer 23 is a multilayer material comprising a first layer 26 formed substantially by fibres, for example glass, carbon or Kevlar fibres, i.e. a synthetic polymer fibre, a second layer 28 of a stiffer material with respect to the first layer 26 and formed for example by a wood panel, or of PVC (polyvinylchloride), and a third layer 30 formed substantially by fibres, for example glass, carbon or Kevlar fibres.

The layers 26, 28, 30 are placed on the non-reflective surface of the mirror 18.

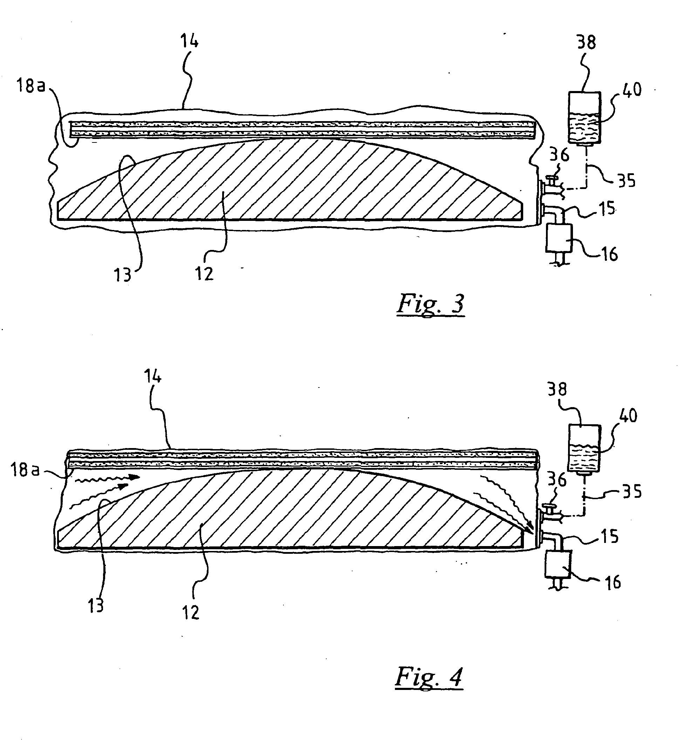

In a subsequent step, the non-rigid container 14 is closed and sealed by means of sealing tapes, of known type and not illustrated in the drawings, and the suction pump 16 is activated in order to create a vacuum or reduced pressure inside the non-rigid container 14 (figure 3). The pressure difference between the outside environment surrounding the non-rigid container 14 and the inner chamber defined in the container 14 is about 1 atmosphere; in particular, the inside pressure is about 20 millibars, while the outside pressure is the atmospheric pressure.

The vacuum is made at ambient temperature.

The external pressure initially compresses the non-rigid container 14 against the inert material 23 and the flat mirror 18a (figure 4) against the mould 12, and subsequently uniformly compresses the mirror, obtaining a mirror 18 shaped on the mould 12 (figure 4), so to obtain the round paraboloid conformation.

In other words, in reduced pressure conditions, the mirror 18 and the overlying inert material layer 23 are thrust against the mould 12 by the atmospheric pressure acting on the non-rigid container 14, and they take on the shape of the mould 12.

It should be indicated that that which is most important for the present invention is the fact that the mirror 18 is shaped by exerting a uniformly distributed and gradually increasing pressure over the entire surface of the mirror 18.

Subsequently, by keeping the pump 16 in function, i.e. in an on condition, and thus keeping the shaped mirror on the mould 12, a step of stiffening the inert material 23 is carried out, so to obtain a stiff covering with form matching the shaped mirror 18, wherein such stiff coating also has the function of maintaining the mirror in round paraboloid, concave form over time.

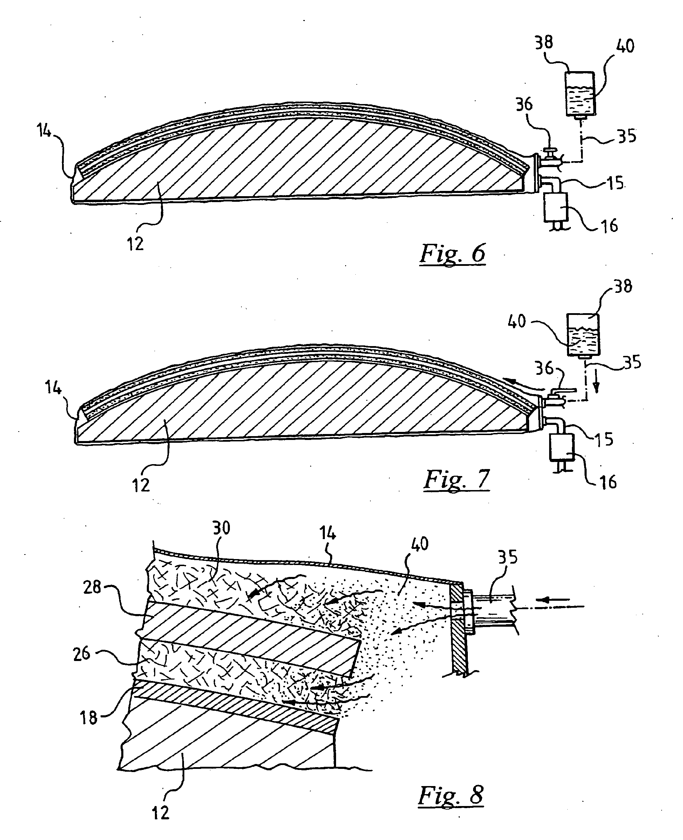

To such end, the non-rigid container 14 is placed in communication with a glue reserve tank 38 (figure 6) by means of an inflow line 35, suitably provided with regulating valves 36. A higher pressure is set inside the reserve tank 38, for example ambient pressure, than that inside the non-rigid container 14.

The glue is fluid glue, for example of the thermosetting type, and in particular epoxy resin 40. Initially the resin is very liquid, so that it reaches all the interstices existing between the fibres.

The resin is suctioned via reduced pressure (figures 7 and 8) inside the non-rigid container 14, and penetrates into the inert material layer 23, according to the vacuum infusion principle.

The basic principle of such infusion consists of drawing liquid resin, via reduced pressure or vacuum, in all directions through the interstices existing between the fibres, until their complete impregnation.

In substance, in a single step, the resin 40 is sucked directly from the tank and distributed over the entire surface of the inert material 23, passing through the air interstices existing between the fibres.

During the filling with glue of the interstices between the fibres, slight pressure increases can occur, which can be regulated by operating on the suction of the pump 16.

The reduced pressure inside the non-rigid container 14 thus has the double function of both shaping the mirror 18 and drawing the resin 40.

After the insertion, the resin 40 is left to harden. In the example, the hardening requires a lot of time, i.e. many hours of wait, since the resin, as said, is very liquid initially.

The hardening causes a stiffening of the inert material layer 23, which thus forms the stiff covering integral with the mirror 18. The hardening of the glue in fact permits stably fixing the mirror 18 to the stiff covering.

In the stiff covering, the above-mentioned second layer 28 interposed between the fibre layers 26, 30 forms a spacer layer, and has a mainly structural function. The spacer layer in fact creates a discontinuity between the glued fibre layers 26, 30, and thus confers a sufficient resistance to tensile and contraction stresses to the stiff covering.

In addition, it is observed that, in order to prevent the reflective surface of the mirror 18 from being dirtied by the resin 40, it is previously coated with a detaching fabric or film, such as for example silicone grease, which permits the facilitated detachment of the resin 40 once hardening has been completed.

When the resin 40 is hardened, the final product, i.e. the solar concentrator 10, is removed from the mould 12 and extracted from the non-rigid container 14. Subsequently, the detaching film is removed from the reflective surface of the mirror 18.

In such a manner, a solar concentrator 10 is obtained having a single continuous surface with round paraboloid form and lacking surface discontinuities.

The main advantage of the present invention lies in being able to make a solar concentrator having round paraboloid form, of any size, having high concentration properties with minimum aberrations, and limited costs, thus permitting mass production.

In the illustrated example, the solar concentrator 10 has round paraboloid section form, obtained from a triangular mirror; nevertheless, using a mirror and a mould with different sizes, such as for example a greater size section, it is possible to obtain solar concentrators of different sizes.

In addition, it is possible to use a mirror having a thickness greater than 0.8 mm. In this case, in order to avoid breaks of the mirror, it is heated before shaping under pressure.

A further advantage of the present invention lies in the possibility to make a uniform shaping of a section without risking the formation of surface irregularities, bends or cracks on the mirror.

A further advantage lies in making the stiff covering of the mirror by means of the same equipment used for the vacuum shaping, and substantially during the same shaping step.

Of course, a man skilled in the art, in order to satisfy contingent and specific needs, can make numerous modifications and variants to the above-described solar concentrator and method for making a solar concentrator, all moreover contained in the protective scope of the invention as defined by the following claims.

## Claims

1. Method for obtaining a solar concentrator comprising a concave mirror (18) having continuous reflective surface shaped as a round paraboloid, comprising the steps of:
- providing a mould (12) having a wall (13) formed as a round paraboloid,
- arranging a flat starting mirror (18a) on said wall (13),
- arranging a layer of porous inert material (23) on the side of the flat mirror (18a) opposite the reflective surface;
- positioning, in a mutual predetermined operating relation, said mould (12) and said flat starting mirror (18a) inside a soft container (14);
- shaping the flat mirror (18a) by establishing a vacuum in the container (14) so that the external pressure compresses the flat mirror (18a) and the porous inert material (23) against said wall (13), the mirror (18) being shaped by exerting a uniformly distributed and gradually increasing pressure over the entire surface;
- filling the container (14) with fluid glue which penetrates into the porous inert material (23) forming a stiff covering integral with the mirror, said glue being distributed over the entire surface of the inert material (23) by the vacuum established in the container (14) keeping the shaped mirror on the mould (12).

2. Method according to claim 1, **characterised in that** said round paraboloid - shaped wall (13) is a convex wall of said mould (12) and that said flat mirror (18a) is positioned in substantial abutment thereon, with reflective surface turned towards said convex wall.

3. Method according to claim 1, **characterised in that** the layer of inert material (23) is obtained by superimposing a first fibre layer (26), a stiff layer (28) and a second fibre layer (30), said stiff layer (28) being interposed between the first and second fibre layers (26, 30).

4. Method according to claim 1, **characterised in that** the layer of inert material (23) comprises granules of expanded plastic material.

5. Method according to claim 3, **characterised in that** the glue is an epoxy resin (40).

6. Method according to claim 4, **characterised in that** the glue is a cement fluid.

7. Method according to claim 1, **characterised in that** said round paraboloid - shaped wall (13) is a concave wall of said mould, and that said flat mirror (18a) is positioned in substantial abutment thereon, wherein the surface of said flat mirror (18a) opposite the respective reflective surface is turned towards said concave wall.

8. Method according to any preceding claims 1-7, **characterised in that** the vacuum is made at ambient temperature.

9. Equipment for making a solar concentrator (10), comprising a flat starting mirror (18a), a layer of porous inert material (23), a mould (12) having a wall (13) substantially shaped as a round paraboloid, a soft vacuum container (14) inside of which the mould (12) the flat starting mirror (18a) and said material (23) are placed, in a predetermined operating relation, **characterised in that** it comprises a reserve tank (38) of glue (40), inside of which a higher pressure is set than the pressure inside the soft container (14) during the shaping of the concentrator, wherein the reserve tank (38) is placed in communication with the inside of the soft container (14).

## Patentansprüche

1. Verfahren zur Herstellung eines Solarkonzentrators, der einen in der Form eines runden Paraboloiden geformten Hohlspiegel (18) mit einer ununterbrochenen reflektierenden Oberfläche umfasst, das die folgenden Schritte umfasst:
- Bereitstellen eines Formwerkzeugs (12), das eine in der Form eines runden Paraboloiden ausgebildete Wand (13) aufweist;
- Anordnen eines flachen Anfangsspiegels (18a) auf der Wand (13);
- Anordnen einer Schicht aus einem porösen inerten Material (23) auf der der reflektierenden Oberfläche entgegengesetzten Seite des flachen Spiegels (18a);
- Positionieren des Formwerkzeugs (12) und des flachen Anfangsspiegels (18a) in einer wechselseitig vorbestimmten Wirkbeziehung in einen weichen Behälter (14);
- Formen des flachen Spiegels (18a) durch Herstellung eines Vakuums im Behälter (14) derart, dass der Außendruck den flachen Spiegel (18a) und das poröse inerte Material (23) gegen die Wand (13) drückt, wobei der Spiegel (18) durch Ausüben eines gleichmäßig verteilten und graduell zunehmenden Drucks über der gesamten Oberfläche geformt wird;
- Füllen des Behälters (14) mit Flüssigklebstoff, der in das poröse inerte Material (23) eindringt und eine mit dem Spiegel einteilige steife Hülle bildet, wobei der Klebstoff durch das im Behälter (14) hergestellte Vakuum, das den geformten Spiegel auf dem Formwerkzeug (12) hält, über der gesamten Oberfläche des inerten Materials (23) verteilt wird.

2. Verfahren nach Anspruch 1, **dadurch gekennzeichnet, dass** die Wand (13) mit der Form eines runden Paraboloiden eine konvexe Wand des Formwerkzeugs (12) ist, und dass der flache Spiegel (18a) im Wesentlichen daran anliegend positioniert ist, wobei die reflektierende Oberfläche zur konvexen Wand gedreht ist.

3. Verfahren nach Anspruch 1, **dadurch gekennzeichnet, dass** die Schicht aus inertem Material (23) erhalten wird, indem eine erste Faserschicht (26), eine steife Schicht (28) und eine zweite Faserschicht (30) übereinander gelegt werden, wobei die steife Schicht (28) zwischen die erste und die zweite Faserschicht (26, 30) eingefügt wird.

4. Verfahren nach Anspruch 1, **dadurch gekennzeichnet, dass** die Schicht aus inertem Material (23) Granulate aus expandiertem Kunststoff umfasst.

5. Verfahren nach Anspruch 3, **dadurch gekennzeichnet, dass** der Klebstoff ein Epoxyharz (40) ist.

6. Verfahren nach Anspruch 4, **dadurch gekennzeichnet, dass** der Klebstoff eine Bindemittelflüssigkeit ist.

7. Verfahren nach Anspruch 1, **dadurch gekennzeichnet, dass** die Wand (13) mit der Form eines runden Paraboloiden eine konkave Wand des Formwerkzeugs ist und dass der flache Spiegel (18a) im Wesentlichen daran anliegend positioniert ist, wobei die der respektiven reflektierenden Oberfläche entgegengesetzte Oberfläche des flachen Spiegels (18a) zur konkaven Wand gedreht ist.

8. Verfahren nach einem der vorstehenden Ansprüche 1 bis 7, **dadurch gekennzeichnet, dass** das Vakuum bei Raumtemperatur hergestellt wird.

9. Einrichtung zur Herstellung eines Solarkonzentrators (10), umfassend einen flachen Anfangsspiegel (18a), eine Schicht aus einem porösen inerten Material (23), ein Formwerkzeug (12) mit einer im Wesentlichen in der Form eines rundes Paraboloiden geformten Wand (13) und einen weichen Vakuumbehälter (14), in dem das Formwerkzeug (12), der flache Anfangsspiegel (18a) und das Material (23) in einer vorbestimmten Wirkbeziehung angeordnet werden, **dadurch gekennzeichnet, dass** sie einen Vorratsbehälter (38) mit Klebstoff (40) umfasst, in dem ein höherer Druck als der Druck im weichen Behälter (14) während des Formens des Konzentrators eingestellt ist, wobei der Vorratsbehälter (38) in Verbindung mit dem Innern des weichen Behälters (14) gesetzt ist.

## Revendications

1. Procédé pour réaliser un concentrateur d'énergie solaire comprenant un miroir concave (18) comportant une surface réfléchissante continue profilée comme un paraboloïde circulaire, comprenant les étapes consistant à:
- prédisposer un moule (12) comportant une paroi (13) formée comme un paraboloïde circulaire,
- disposer un miroir de départ plat (18a) sur ladite paroi (13),
- disposer une couche de matière inerte poreuse (23) sur le côté du miroir plat (18a) opposé à la surface réfléchissante ;
- positionner ledit moule (12) et ledit miroir de départ plat (18a) à l'intérieur d'un conteneur souple (14) dans une relation opérationnelle réciproque prédéterminée ;
- profiler ensuite le miroir plat (18a) en établissant un vide dans le conteneur (14) de manière que la pression extérieure comprime le miroir plat (18a) et la matière inerte poreuse (23) contre ladite paroi (13), le miroir (18) étant profilé en exerçant une pression augmentant progressivement et uniformément distribuée sur toute la surface ;
- remplir le conteneur (14) avec de la colle fluide qui pénètre dans la matière inerte poreuse (23) en formant une couverture rigide d'une seule pièce avec le miroir, ladite colle étant distribuée sur toute la surface de la matière inerte (23) par le vide établi dans le conteneur (14) maintenant le miroir profilé sur le moule (12).

2. Procédé selon la revendication 1, **caractérisé en ce que** ladite paroi profilée en paraboloïde circulaire (13) est une paroi convexe dudit moule (12) et ledit miroir plat (18a) est positionné sensiblement en butée contre celle-ci, avec la surface réfléchissante orientée vers ladite paroi convexe.

3. Procédé selon la revendication 1, **caractérisé en ce que** la couche de matière inerte (23) est obtenue par superposition d'une première couche de fibres (26), une couche rigide (28) et une deuxième couche de fibres (30), ladite couche rigide (28) étant interposée entre les première et deuxième couches de fibres (26, 30).

4. Procédé selon la revendication 1, **caractérisé en ce que** la couche de matière inerte (23) comprend des granules de matière plastique expansée.

5. Procédé selon la revendication 3, **caractérisé en ce que** la colle est une résine époxyde (40).

6. Procédé selon la revendication 4, **caractérisé en ce que** la colle est un fluide liant.

7. Procédé selon la revendication 1, **caractérisé en ce que** ladite paroi profilée en paraboloïde circulaire (13) est une paroi concave dudit moule et **en ce que** ledit miroir plat (18a) est positionné sensiblement en butée contre celle-ci, dans lequel la surface dudit miroir plat (18a) opposée à la surface réfléchissante respective est orientée vers ladite paroi concave.

8. Procédé selon l'une quelconque des revendications 1 à 7, **caractérisé en ce que** le vide est réalisé à température ambiante.

9. Equipement pour la construction d'un concentrateur d'énergie solaire (10), comprenant un miroir de départ plat (18a), une couche de matière inerte poreuse (23), un moule (12) comportant une paroi (13) sensiblement profilée comme un paraboloïde circulaire, un conteneur souple pour le vide (14) à l'intérieur duquel sont placés le moule (12), le miroir de départ plat (18a) et ladite matière (23), dans une relation opérationnelle prédéterminée, **caractérisé en ce qu'**il comprend un réservoir de réserve (38) de colle (40), à l'intérieur duquel est établie une pression supérieure à la pression à l'intérieur du conteneur souple (14) durant le formage du concentrateur, dans lequel le réservoir de réserve (38) est mis en communication avec l'intérieur du conteneur souple (14).
